# FASCICULE DE BREVET EUROPEEN

(11) **EP 2 109 165 B1**
(45) Date de publication et mention de la délivrance du brevet: **10.10.2012**
(21) Numéro de dépôt: 09290186.7
(22) Date de dépôt: 13.03.2009
(51) Int. Cl.: H01M 2/02, H01M 2/10, H01M 2/12, H01M 10/42, H01M 10/50, H01M 10/52, B60R 16/04

(54) **Batterie électrique comprenant des éléments générateurs souples et un système de conditionnement mécanique et thermique desdits éléments**
Elektrische Batterie, die flexible Generatorelemente und ein mechanisches und thermisches Aufbereitungsystem dieser Element umfasst
Electrical battery comprising flexible generator elements and a mechanical and thermal packaging system for said elements

(30) Priorité: 08.04.2008 FR 0801937
(43) Date de publication de la demande: 14.10.2009
(73) Titulaire: Dow Kokam France SAS, 91300 Massy (FR)
(72) Inventeur: Gaben, François, 92400 Courbevoie (FR)
(74) Mandataire: Sayettat, Julien Christian

(56) Documents cités:
- WO-A-02/27816
- WO-A-2006/093010
- WO-A-2006/108529
- FR-A- 2 895 838
- US-A- 4 678 725
- US-A- 5 756 227
- US-A1- 2003 232 236
- US-A1- 2004 069 620
- US-A1- 2005 170 240

## Description

L'invention concerne une batterie électrique qui est notamment destinée à la traction de véhicule automobile électrique ou hybride c'est-à-dire comprenant un moteur électrique d'entraînement des roues motrices combiné avec un moteur thermique d'entraînement de ces roues ou éventuellement d'autres roues motrices.

En particulier, l'invention s'applique pour un haut degré d'hybridation des véhicules thermiques qui peut aller jusqu'à une électrification complète de la chaîne de traction. Dans ce cas, les batteries ne servent alors plus uniquement à assister les véhicules dans des phases d'accélération mais également à assurer le déplacement du véhicule de manière autonome sur des distances plus ou moins importantes.

Pour garantir les niveaux de puissance et d'énergie requis pour les applications considérées, il est nécessaire de créer des batteries comprenant une pluralité d'éléments générateurs d'énergie électrique.

Toutefois, lorsque ces éléments sont chargés et déchargés, il en résulte une production de chaleur qui, lorsqu'elle n'est pas contrôlée, peut avoir pour effet de diminuer la durée de vie des éléments, voire donner lieu dans des conditions extrêmes, à des risques d'emballement thermique pour certaines compositions chimiques d'éléments, conduisant à la détérioration de la batterie.

Ainsi, pour optimiser les performances et la durée de vie des batteries, des systèmes de conditionnement thermique des éléments sont intégrés dans les batteries. En particulier, les systèmes de conditionnement thermique peuvent comprendre un chemin de circulation d'un liquide de conditionnement thermique, ledit chemin étant formé essentiellement autour des éléments générateurs.

En outre, dans l'application automobile envisagée, l'efficacité de ces systèmes doit être importante puisque les pics de dissipation thermique sont fonction des densités de courant et de leurs variations qui peuvent atteindre des valeurs très élevées, notamment lors des phases de fortes accélérations, de freinages régénératifs, de recharges rapides de la batterie ou de fonctionnement autoroutier en mode électrique.

Les éléments générateurs comprennent classiquement au moins une cellule électrochimique, par exemple de type Lithium - ion ou Lithium - polymère, qui est formée d'un empilement de couches électro actives agissant successivement comme cathodes et anodes, lesdites couches étant mises en contact par l'intermédiaire d'un électrolyte.

Ces cellules électrochimiques sont généralement conditionnées dans des conteneurs rigides et hermétiques afin de les protéger des agressions extérieures. En particulier, ces conteneurs peuvent être fabriqués à partir de tôles embouties en profondeur pour former des godets qui, après introduction d'un enroulement de couches empilées, peuvent être refermés par soudage d'un couvercle.

Ce type de conditionnement présente certains inconvénients parmi lesquels des coûts de fabrication élevés ainsi que la nécessité d'isoler électriquement au moins une des électrodes du godet métallique et d'ajouter des soupapes de décharge permettant de relâcher la pression en cas de surcharge ou de surchauffe d'un élément.

Pour résoudre ces inconvénients, on a proposé de former un élément générateur en conditionnant un empilement plan de couches électro actives dans une enveloppe étanche et souple. En outre, ce type d'éléments générateurs présente typiquement une géométrie prismatique qui permet d'augmenter les surfaces d'échanges avec le liquide de conditionnement thermique.

Toutefois, avec une telle enveloppe, on affaiblit de façon importante la résistance mécanique des éléments, ce qui va à l'encontre des contraintes en vigueur dans l'industrie automobile, notamment relativement aux crashs.

En outre, l'empilement est alors susceptible de se déformer, notamment avec déplacement des couches les unes par rapport aux autres. En particulier, une telle déformation peut être induite par l'évolution du volume des matériaux actifs servant d'anodes ou de cathodes en fonction de son taux d'insertion en ion lithium.

Il résulte de ces déplacements des variations des résistances de contact entre lesdites couches, lesdites variations produisant des échauffements supplémentaires pouvant conduire à des vieillissements prématurés, à une limitation des énergies disponibles ainsi qu'à des risques de déclenchement d'emballement thermique.

On connait des documents US-2005/170240 et US-2004/069620 une batterie selon le préambule de la revendication 1. Document WO 2006/093010 A présente également un système de conditionnement mécanique et thermique d'une batterie électrique.

L'invention vise à perfectionner l'art antérieur en proposant une batterie électrique qui combine les avantages de l'utilisation d'éléments générateurs à enveloppe souple avec un système de conditionnement mécanique et thermique qui permet d'améliorer la durée de vie et la sécurité de la batterie tant d'un point de vue du comportement électrochimique, que vis-à-vis des contraintes en vigueur dans l'industrie automobile, et notamment celles concernant le crash.

A cet effet, l'invention propose une batterie électrique comprenant une pluralité d'éléments générateurs d'énergie électrique formés d'au moins une cellule électrochimique qui est conditionnée dans une enveloppe étanche souple, ladite batterie comprenant en outre un système de conditionnement mécanique et thermique desdits éléments, ledit système de conditionnement formant un corps structurel en matériau conducteur thermique, ledit corps présentant deux longerons et une pluralité de traverses reliant lesdits longerons de sorte à former entre lesdites traverses des logements dans lesquels respectivement un élément générateur est disposé, ledit corps intégrant un chemin de circulation d'un fluide de conditionnement thermique, ledit chemin comprenant deux canaux respectivement amont et aval qui sont formés respectivement dans un longeron et des passages formés dans chacune des traverses, lesdits passages étant en communication fluidique de part et d'autre avec respectivement le canal amont et le canal aval.

D'autres particularités et avantages de l'invention apparaîtront dans la description qui suit, faite en référence aux figures jointes dans lesquelles :
- la figure 1 est une vue partielle en perspective partiellement coupée d'une batterie selon un mode de réalisation de l'invention, montrant notamment le corps structurel du système de conditionnement mécanique et thermique ainsi que la disposition des éléments générateurs dans celui-ci;
- la figure 2 est une vue partielle en perspective de la batterie de la figure 1, montrant en éclaté un élément générateur ainsi que le bus barre et la carte électronique associés ;

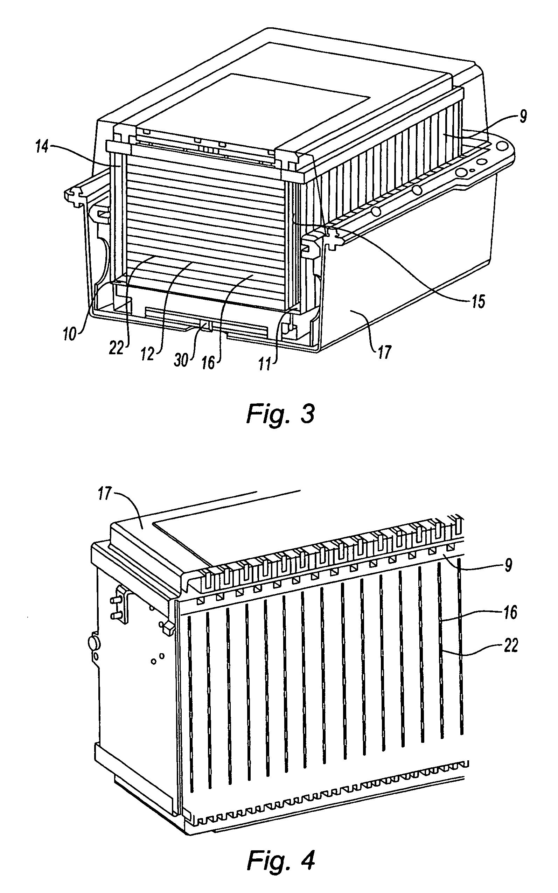

- la figure 3 est une vue en coupe transversale de la batterie de la figure 1, montrant en outre le corps disposé dans un bac de protection ;
- la figure 4 est une vue partielle en coupe longitudinale de la batterie de la figure 1, montrant en outre le corps disposé dans un bac de protection ;
- la figure 5 est une vue en coupe longitudinale d'une cellule électrochimique de la batterie selon la figure 1 ;
- la figure 6 est une vue en perspective d'un des modules formant le corps structurel de la batterie selon la figure 1 ;
- la figure 7 est une vue en perspective éclatée montrant la disposition d'un élément générateur entre deux modules selon la figure 6 ;
- la figure 8 est une vue en perspective de l'élément générateur selon la figure 7, montrant la disposition de l'enrobage dudit élément par une matrice structurelle ;
- les figures 9 sont des représentations d'un élément générateur disposé dans un logement selon une réalisation vue de face (figure 9a) et vue en coupe AA (figure 9b), et selon une variante vue en coupe AA (figure 9c) ;
- la figure 10 est une vue partielle agrandie montrant la zone rupture en communication avec un canal d'échappement ;
- la figure 11 est une vue en perspective d'un corps structurel monobloc pour une batterie selon un mode de réalisation de l'invention ;
- la figure 12 est une vue en perspective de deux types de modules pour former un corps structurel par encastrement alterné ;
- la figure 13 est une vue en coupe d'un module selon la figure 12, ledit module intégrant une paire d'éléments générateurs et une matrice structurelle ;
- les figures 14 sont des vues en coupe de l'encastrement alterné de modules selon la figure 13, la coupe étant réalisée respectivement au niveau des éléments générateurs (figure 14a) et au niveau du canal amont (figure 14b).

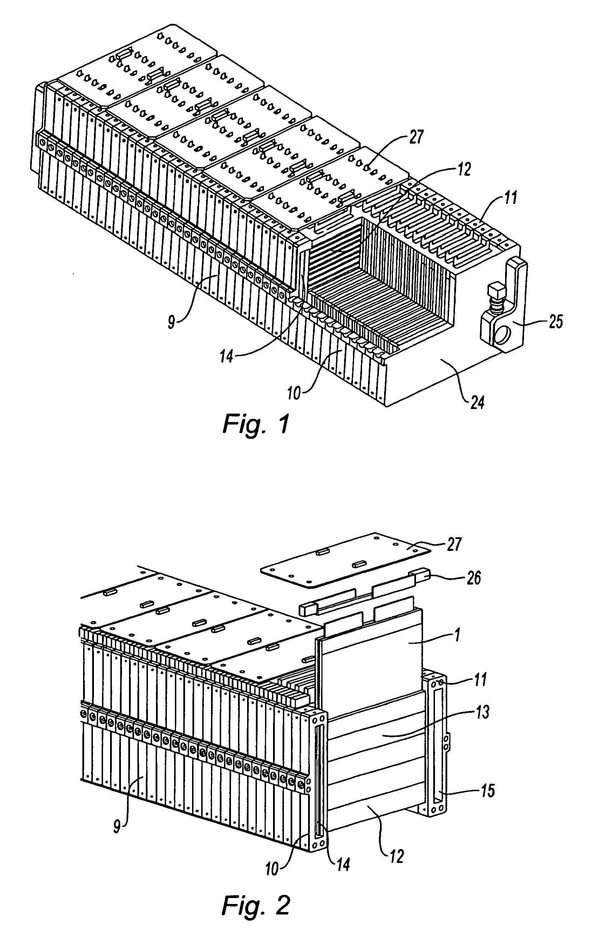

Dans la description, les termes de positionnement dans l'espace sont pris en référence à la position de la batterie représentée sur la figure 1. Toutefois, l'étanchéité de la batterie permet d'envisager son positionnement selon une orientation différente.

En relation avec les figures, on décrit ci-dessous une batterie électrique comprenant une pluralité d'éléments 1 générateurs d'énergie électrique formés d'au moins une cellule électrochimique 2 qui est conditionnée dans une enveloppe 3 étanche souple. En particulier, les cellules électrochimiques 2 sont de type Lithium - ion ou Lithium - polymère.

La batterie est plus particulièrement destinée à alimenter un moteur électrique de traction d'un véhicule automobile, qu'il s'agisse d'un véhicule électrique ou de type hybride électrique - thermique. Toutefois, la batterie selon l'invention peut également trouver son application pour le stockage d'énergie électrique dans d'autres modes de transport, et notamment en aéronautique. Par ailleurs, dans des applications stationnaires telles que pour des éoliennes, la batterie selon l'invention peut également être utilisée de façon avantageuse.

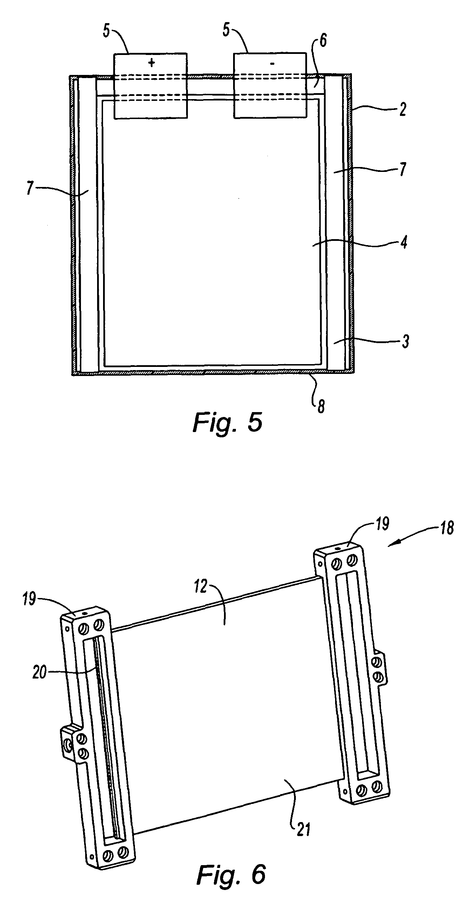

En relation avec la figure 5, une cellule électrochimique 2 présente une géométrie prismatique et comprend un empilement plan de couches 4 électro actives agissant successivement comme cathodes et anodes, lesdites couches étant mises en contact par l'intermédiaire d'un électrolyte. Par ailleurs, deux bornes 5 s'étendent au-delà du bord supérieur de l'enveloppe 3 pour permettre la connexion électrique de ladite cellule.

L'enveloppe 3 comprend deux feuilles dont les bords supérieurs 6 et latéraux 7 sont thermosoudés l'un sur l'autre et dont les bords inférieurs 8 sont repliés pour former le fond de ladite enveloppe. En particulier, les feuilles sont formées avec un film multicouche qui est disposé autour de l'empilement de couches 4 électro actives, lesdites feuilles venant envelopper ledit empilement, notamment en réalisant le vide à l'intérieur de l'enveloppe 3 préalablement au thermosoudage.

Par ailleurs, le film est optimisé pour résister aux agressions d'électrolytes et de solvants, le thermosoudage étant agencé pour résister aux agressions de l'air et de l'humidité afin d'assurer la longévité de la cellule électrochimique 2. En effet, la chimie des cellules Lithium - ion ou Lithium - polymère est sensible à l'eau et l'air qui conduit à des oxydations prématurées se traduisant par une augmentation des résistances internes et de la pression à l'intérieur de l'enveloppe 3.

La batterie comprend un système de conditionnement mécanique et thermique des éléments générateurs, ledit système permettant, d'une part, de conditionner en température lesdits éléments et, d'autre part, de les maintenir dans une structure de renfort. Ainsi, le système assure la sécurité électrique de la batterie vis-à-vis des risques liés à la température, le fonctionnement de la batterie dans une plage de température optimale ainsi que la sécurité relativement aux risques de crashs qui sont inhérents à l'application plus particulièrement considérée.

Pour assurer le conditionnement mécanique, le système forme un corps structurel 9 en matériau conducteur, notamment métallique tel que l'aluminium qui présente en outre l'avantage d'un faible poids. Par structurel, on entend que le corps 9 assure la tenue mécanique des éléments générateurs 1, notamment relativement aux contraintes de crashs tests en vigueur dans l'industrie automobile mais également relativement aux autres formes de sollicitations mécaniques que la batterie a à subir dans une automobile.

Le corps 9 présente deux longerons 10, 11 qui s'étendent longitudinalement en étant disposés latéralement de part et d'autre de la batterie. Le corps 9 présente également une pluralité de traverses 12 qui s'étendent transversalement en reliant lesdits longerons de sorte à former entre lesdites traverses des logements 13 dans lesquels respectivement un élément générateur 1 est disposé.

En outre, pour assurer le conditionnement thermique, le corps 3 intègre un chemin de circulation d'un fluide de conditionnement thermique, ledit chemin comprenant deux canaux respectivement amont 14 et aval 15 qui sont formés respectivement dans un longeron 10, 11 et des passages 16 formés dans chacune des traverses 12, lesdits passages étant en communication fluidique de part et d'autre avec respectivement le canal amont 14 et le canal aval 15. Ainsi, les traverses 12 forment échangeurs thermiques entre les éléments générateurs 1 et un même canal 14, 15 sert respectivement pour l'alimentation et l'évacuation en fluide des passages 16 de toutes les traverses 12.

Dans les modes de réalisation représentés, les traverses 12 sont adjacentes longitudinalement de sorte à former les logements 13 entre elles, les canaux amont 14 et aval 15 s'étendant longitudinalement dans respectivement un longeron 10, 11. En outre, un seul élément logement 13 est formé entre deux traverses 12 adjacentes.

Par ailleurs, la batterie peut comprendre un bac étanche 17, notamment en plastique, dans lequel le corps structurel 9 et les éléments générateurs 1 sont disposés, ledit bac étant agencé pour permettre son implantation dans le véhicule. En outre, le vide peut être réalisé à l'intérieur du bac 17 pour accroitre l'isolation thermique et permettre d'augmenter la durée de vie des éléments générateurs 1 en limitant la migration de l'air et de l'humidité sur lesdits éléments.

La batterie comprend également un dispositif de mise en circulation (non représenté) dudit fluide de sorte à assurer le conditionnement thermique des éléments 1, par exemple une pompe qui permet de mettre le fluide sous pression dans un circuit fermé, ainsi qu'éventuellement un échangeur thermique.

Plus précisément, la batterie comprend des moyens d'alimentation en fluide du canal amont 14 et des moyens d'évacuation du fluide dans le canal aval 15 après le passage dudit fluide au travers des traverses 12. En particulier, les passages 16 de chacune des traverses 12 peuvent ainsi être alimentés en parallèle par un seul canal amont 14, de sorte que le fluide parcourant chacune des traverses 12 soit issu directement du canal amont 14, sans avoir préalablement parcouru une autre traverse 12. Il en résulte donc une excellente homogénéité thermique en évitant l'accumulation de chaleur liée à une succession d'échanges thermiques.

Le fluide peut être un gaz, notamment de l'air, ou un liquide, notamment un liquide diélectrique à faible tension de vapeur ou de l'eau éventuellement glycolée. Le conditionnement thermique s'entend tant en apport qu'en retrait de calories de sorte à maintenir les éléments générateurs 1 dans une plage de fonctionnement en température qui est optimale. En particulier, le système de conditionnement permet d'assurer rapidement et efficacement un apport ou un retrait de calories dans la batterie, de sorte à assurer la régulation thermique quelles que soient les conditions d'utilisation.

Selon une réalisation représentée notamment sur les figures 6-7 et 12-14, le corps structurel 9 peut être formé par l'association étanche de modules 18. Ainsi, on peut moduler de façon particulièrement simple la puissance de la batterie en ajustant le nombre de modules 18 et donc d'éléments générateurs 1.

Pour ce faire, les modules 18 représentés comprennent :
- deux portions de longerons 10, 11 dans chacune desquelles une portion de canal 14, 15 est formée ; et
- une traverse 12 sur les bords de laquelle respectivement une portion de longerons 10, 11 est associée, les passages 16 de ladite traverse étant en communication fluidique avec lesdites portions de canal.

En outre, l'association des modules 18 est agencée pour mettre en communication fluidique les portions de canal 14, 15 de sorte à former les canaux amont 14 et aval 15 de part et d'autre des passages 16.

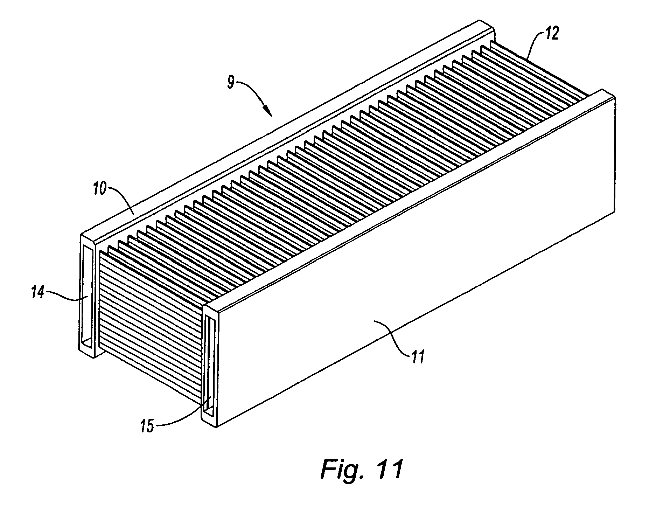

En variante représentée sur la figure 11, le corps structurel 9 peut être monobloc, par exemple en formant une structure profilée et soudée formant les logements 13 dans lesquels les éléments générateurs 1 sont disposés. En particulier, l'agencement des longerons et des traverses, ainsi que des canaux et des passages de fluide qui y sont intégrés, peut être analogue à celui décrit ci-dessous en relation avec un corps modulaire. Cette structure monobloc présente notamment l'avantage d'utiliser des pièces profilées qui évitent les investissements coûteux à chaque modification de la dimension de la batterie.

Sur les figures 6-7, 12-14, la traverse 12 comprend une plaque creuse 21 qui est solidarisée de part et d'autre à un cadre 19 formant portion de longerons 10, 11, lesdits cadres étant creux pour former portion de canal 14, 15 à l'intérieur d'eux. Plus précisément, chaque bord latéral de la plaque 21 est inséré dans une fente 20 traversant un bord du cadre 19, de sorte à mettre en communication l'intérieur de la plaque 21 avec celui du cadre 19. Le creux des cadres 19 présente une section rectangulaire et le creux de la plaque 21 est pourvu de nervures transversales 22 formant entre elles des canaux formant passages 16 dans lesquels le fluide peut circuler transversalement d'un cadre 19 à l'autre.

Par ailleurs, l'épaisseur des cadres 19 est supérieure à celle des plaques 21 afin de former les logements 13 entre deux traverses 12 adjacentes. En outre, l'épaisseur de la plaque creuse 21 est limitée, par exemple de l'ordre de 0,5 mm, afin de favoriser les échanges thermiques avec les éléments générateurs 1 et contribuer à la compacité de la batterie.

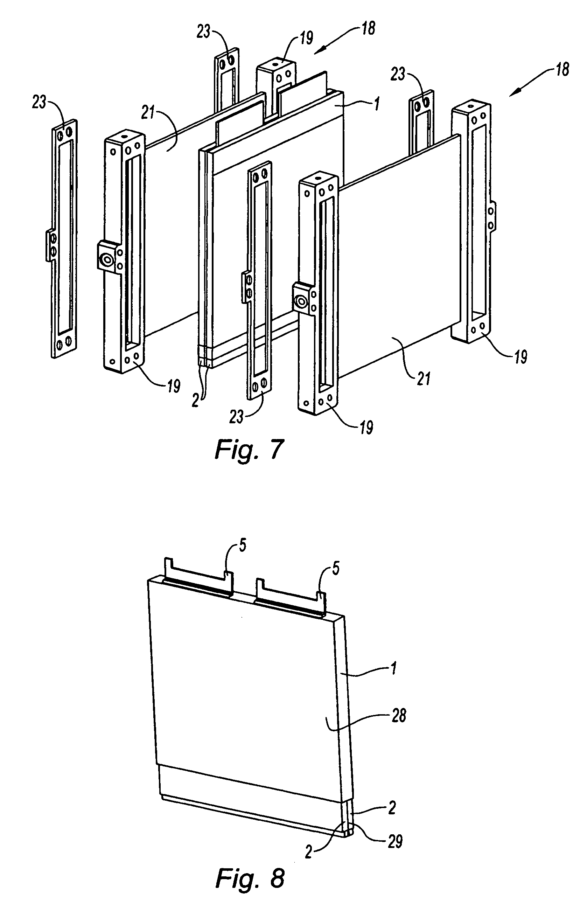

Sur la figure 7 est représentée la réalisation de l'empilement longitudinal des modules 18 selon la figure 6 en mettant les faces respectives des cadres 19 adjacents en appui l'une sur l'autre, de sorte à former un canal longitudinal 14, 15 de part et d'autre des plaques 21. Par ailleurs, l'étanchéité entre les modules 19 est réalisée en interposant un joint 23 entre les faces des cadres 19.

Ensuite, les modules 19 sont associés entre eux, notamment en formant des moyens d'association sur le cadre 19. Dans le mode de réalisation représenté sur la figure 7, l'association est réalisée par vissage au travers d'orifices prévus sur les cadres 19. Par ailleurs, une plaque 24 est associée sur chaque extrémité de l'empilement de modules 19 de sorte à fermer les canaux 14, 15, lesdites plaques étant pourvues respectivement des moyens d'alimentation et de récupération 25 du fluide.

En variante non représentée, le module peut comprendre une plaque emboutie pour présenter une partie centrale entourée de part et d'autre par une ouverture, une autre plaque étant solidarisée sur la partie centrale en formant les passages de fluide entre lesdites plaques.

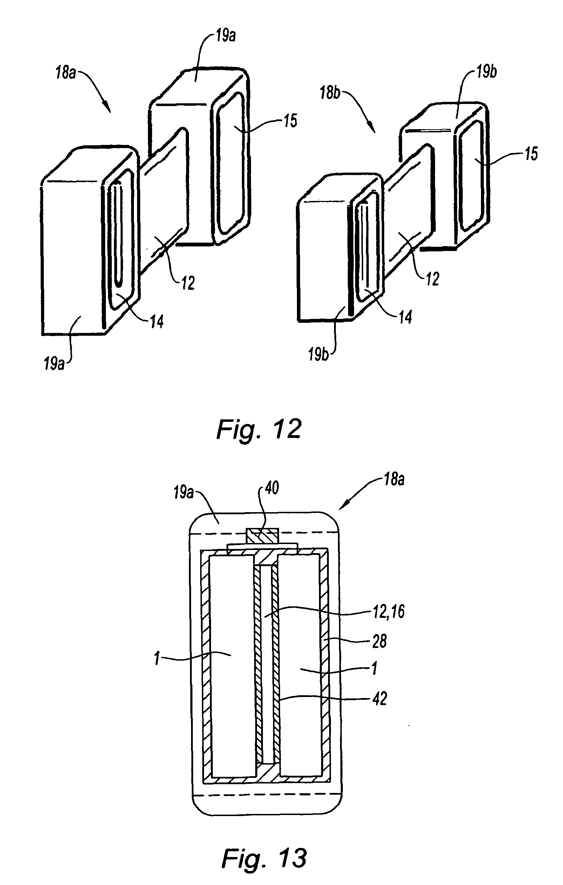

Selon la réalisation des figures 12-14, les modules 18 présentent des cadres creux mâles 19a et des cadres creux femelles 19b, l'association desdits modules étant réalisée par encastrement desdits cadres creux femelles dans lesdits cadres creux mâles.

Plus précisément, la dimension du creux du cadre mâle 19a est égale à la dimension externe du cadre femelle 19b, de sorte à permettre l'encastrement dudit cadre femelle dans ledit creux en mettant les portions de canal 14, 15 en communication fluidique.

En particulier, il est ainsi possible de réaliser un corps 9 :
- présentant une excellente rigidité qui est propice à la tenue aux sollicitions vibratoires automobile, sans risque de voir des vis se desserrer dans le temps ;
- intrinsèquement étanche et ne nécessitant l'ajout d'aucun joint dont on sait que la tenue dans le temps est perfectible et pour lesquels il est difficile de garantir l'efficacité en terme d'étanchéité lors de sollicitation mécaniques sévères ;
- compact et léger sans besoin d'ajouter de vis ;
- dont le temps de montage est fortement réduit.

Pour permettre le démontage des modules 18, un outil spécifique (par exemple de type arrache-moyeux) peut être utilisé pour exercer une force de traction suffisante sur l'assemblage pour désencastrer lesdits modules. En outre, une bague en plastique 41 peut être avantageusement ajoutée au niveau de l'interface entre les cadres 19. Cette dernière étant enlevée, par exemple par découpe, après chaque démontage, pour être remplacée par une nouvelle qui permettra de garantir de nouveau la qualité mécanique du corps après remontage.

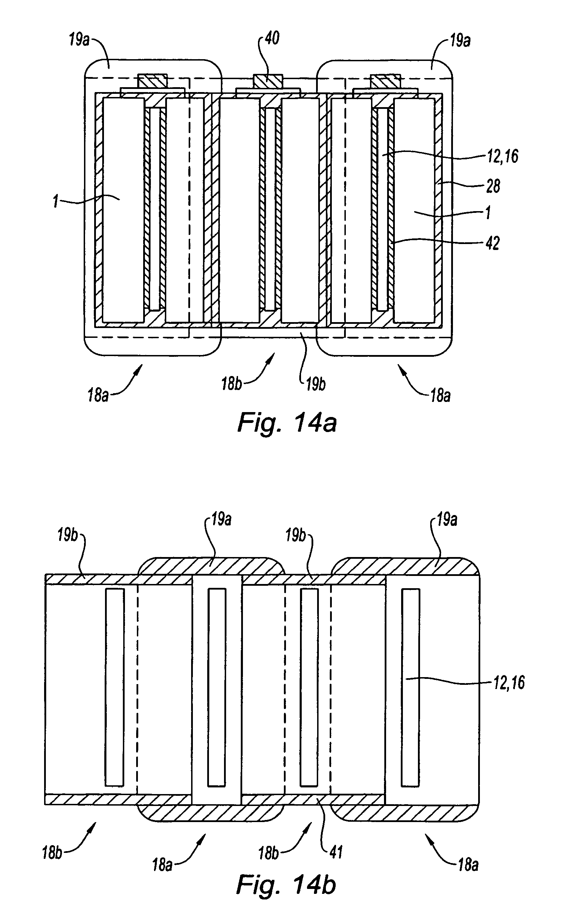

Le mode de réalisation représenté prévoit un premier type de modules 18a présentant deux cadres creux mâles 19a et un deuxième type de modules 18b présentant deux cadres creux femelles 19b, le corps structurel 9 étant formé par l'encastrement alterné de chacun des types de modules 18a, 18b (voir figures 14).

En variante non représentée, chaque module 18 peut présenter un cadre creux mâle 19a et un cadre creux femelle 19b, le corps structurel 9 étant formé par l'encastrement tête-bêche desdits modules.

Dans le mode de réalisation représenté, l'élément générateur 1 comprend deux cellules électrochimiques 2 selon la figure 5 qui sont solidarisées, notamment par collage d'une feuille sur l'autre, les bornes 5 respectives étant soudées en parallèle.

Par ailleurs, les éléments générateurs 1 peuvent être collés sur les traverses 12, notamment au moyen d'une colle thermique, de sorte à améliorer le maintien mécanique des éléments générateurs 1 dans les logements 13 tout en favorisant les transferts thermiques entre lesdits éléments et lesdites traverses. En outre, la disposition des éléments générateurs 1 dans les logements 13 peut être agencée pour limiter les déplacements des couches 4 électro actives les unes par rapport aux autres.

Comme représenté sur la figure 2, le conditionnement électronique de la batterie peut être réalisé notamment en prévoyant un bus barre 26 sur lequel les bornes 5 d'un élément générateur 1 sont soudées, ledit bus barre étant solidarisé au cadre 19. Par ailleurs, la carte électronique 27 de l'élément générateur 1 peut être associée au bus barre 26, notamment en prévoyant une carte électronique 27 commune à plusieurs éléments générateurs 1 adjacents.

Le système de conditionnement comprend en outre une matrice structurelle 28 en résine polymère, ladite matrice remplissant au moins partiellement les logements 13 pour venir enrober les éléments générateurs 1. Ainsi, les éléments générateurs 1 sont tenus dans le corps structurel 9 par la matrice 28 qui contribue également à la résistance mécanique de l'ensemble.

Par ailleurs, la matrice 28 contribue à limiter la déformation des éléments générateurs 1, et donc la possible augmentation de leur résistance interne. La matrice 28 contribue également à l'étanchéité de l'enveloppe 3 et donc à la protection des couches 4 électro actives relativement à l'environnement extérieur (entrée d'humidité, d'air, fuite d'électrolyte).

En outre, la matrice 28 peut être conductrice thermique pour assurer également une fonction de transfert de chaleur entre les éléments générateurs 1 et le fluide circulant dans le chemin, et/ou isolante électrique pour une fonction de sécurité électrique entre lesdits éléments. Concernant le transfert de chaleur, la caractéristique importante est la conductance, qui est le rapport entre la conductivité thermique de la matrice 28 sur son épaisseur. Dans un exemple de réalisation, la matrice 28 présente une conductivité thermique de l'ordre de 1 W/m/°C et une épaisseur de l'ordre de 2 mm.

En tant que résine polymère pour la matrice 28, on peut utiliser tous types de matériaux polymères présentant des propriétés structurelles et notamment des colles qui présentent l'avantage d'augmenter la rigidité de la batterie et de retenir les éléments générateurs 1 dans ladite batterie. Les colles peuvent être par exemple de la famille des époxys, des silicones, des polyuréthanes ou des acryliques..., dans lesquelles peuvent être ajoutés des composants inorganiques présentant des propriétés de conduction thermique, tels que Al₂O₃, AIN, MgO, ZnO, BeO, BN, Si₃N₄, SiC et/ou SiO₂. Dans un exemple de réalisation, une résine époxy bicomposant du type de celle référencée 2605 par la société 3M peut être utilisée.

Pour sa mise en oeuvre, après disposition des éléments générateurs 1 dans les logements 13, la résine fluide est disposée dans lesdits logements, ladite résine étant ensuite solidifiée pour former la matrice structurelle 28. Pour faciliter la recyclabilité de la batterie, un revêtement de primaire, contenant un agent migrant, peut également être appliqué à la surface des éléments générateurs 1. Cet agent migrant doit être capable de migrer sur une des interfaces de liaison pour générer une couche de faible cohésion. Cette migration est rendue possible par une activation thermique, ce qui permet d'assurer le démontage des assemblages collés. Cet agent migrant peut être mis en oeuvre dans un primaire, mais également dans la résine elle-même. L'agent migrant peut être par exemple une polyoléfine, ou plus particulièrement du PTSH (paratoluènesulfohydrazide) qui est connu pour assurer le décollage par apport de chaleur comme le décrit notamment le document WO-2004/087829.

En outre, la matrice 28 peut présenter des propriétés de changement de phases dans une plage de températures permettant d'améliorer le conditionnement en température des éléments générateurs 1. Par ailleurs, la matrice 28 peut également présenter des propriétés autoextinguibles.

Dans le mode de réalisation des figures 12 à 14, chaque module 18 intègre une paire d'éléments générateurs 1 qui sont collés respectivement d'un côté de la traverse 12 au moyen d'une couche de colle 42, lesdits éléments étant au moins partiellement enrobés par la matrice structurelle 28. En outre, les éléments 1 de la paire peuvent être connectés électriquement en série ou en parallèle, par exemple en étant reliés avec un bus-bar intermédiaire intégrant un plot de connexion 40 vissé sur la connectique.

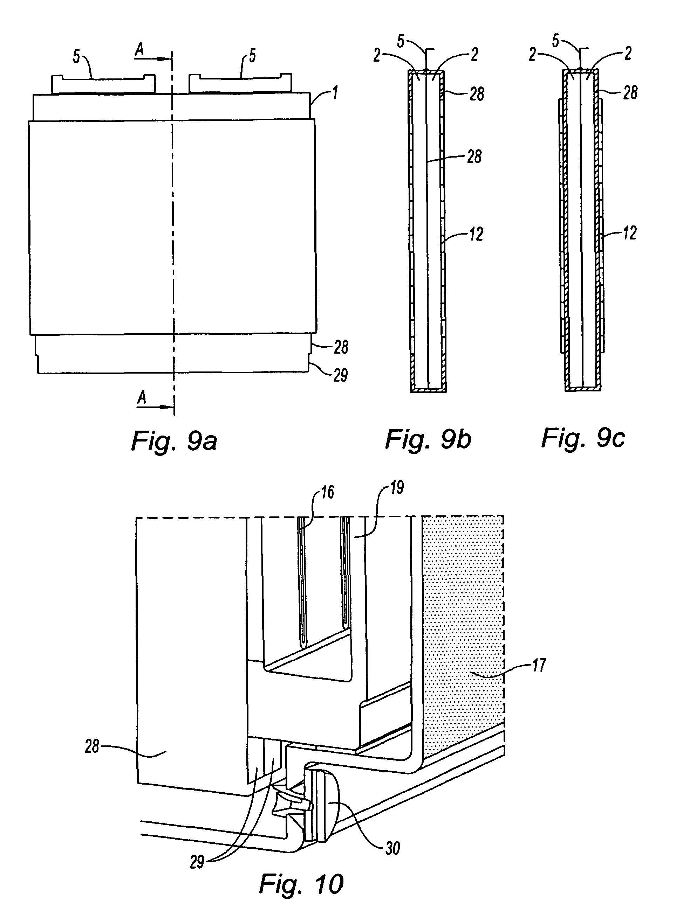

En relation avec la figure 8, au moins une partie du pourtour de l'enveloppe 3 présente une partie affaiblie mécaniquement qui forme zone de rupture 29 en cas de surpression à l'intérieur de l'enveloppe 3. Ainsi, en cas d'emballement thermique ou court-circuit, le surplus de gaz émis par l'élément générateur 1 est évacué à l'extérieur dudit élément à travers la rupture locale, ces gaz étant ensuite évacués hors de la batterie par un canal d'échappement en communication avec la zone de rupture 29, ledit canal comprenant un clapet 30 formé sur le bac 17 (voir figure 10).

L'évacuation de cette surpression permet d'éviter des échauffements supplémentaires qui pourraient conduire à un emballement thermique de la batterie. Par ailleurs, cette possibilité de laisser s'échapper les gaz devient d'autant plus importante que les éléments générateurs 1 sont confinés dans un environnement rigide qui permet de réduire les augmentations de résistance interne et améliore ainsi leur durée de vie.

Dans le mode de réalisation représenté, une portion du pourtour de l'enveloppe 3 n'est pas enrobée de résine de sorte à former une zone de rupture 29 localisée sur un bord latéral 7 au voisinage du fond 8 qui est renforcé par pliage. En outre, le fond de l'enveloppe 3 est dépourvu d'enrobage de résine. En variante non représentée, la zone de rupture peut être formée mécaniquement, par exemple par une prédécoupe de l'enveloppe et/ou de la résine, ou par une réduction locale dans l'épaisseur d'un enrobage de résine qui entoure toute l'enveloppe 3.

En relation avec les figures 9, l'élément générateur 1 comprend deux cellules électrochimiques 2 qui sont solidarisées entre elles. Sur la figure 9b, l'élément générateur 1 est collé sur les traverses 12 et, lors de l'enrobage, un film de matrice 28 assure la solidarisation des cellules électrochimiques 2 entre elles. Dans cette réalisation, une très fine épaisseur de colle se trouve entre les éléments générateurs 1 et les traverses 12. Ainsi, la conductivité thermique dépendant également de l'épaisseur, les échanges thermiques entre les éléments 1 et les traverses 12 peuvent être assurés même si la colle n'est pas très bonne conductrice thermiquement.

Sur la figure 9c, les cellules électrochimiques 2 sont préalablement collées entre elles et la matrice 28 rempli les interstices entre l'élément générateur 1 et les traverses 12. Dans cette réalisation, la matrice 28 disposée entre les éléments générateurs 1 et les traverses 12 présentant une épaisseur importante, il est préférable d'utiliser une matrice 28 présentant une bonne conductivité thermique.

Selon l'invention, l'excellente homogénéité en température dans la batterie permet à la fois d'augmenter le niveau d'équilibrage entre les éléments générateurs 1 et de pouvoir réguler thermiquement la batterie avec une grande précision afin de réduire au maximum les résistances internes des éléments générateurs 1 sans nuire à leur durée de vie. L'optimisation de la gestion thermique permet alors d'augmenter l'énergie et la puissance de la batterie, sans avoir à ajouter d'éléments générateurs 1 supplémentaires.

En outre, le système de conditionnement permet la dissipation de l'énergie thermique provenant de l'emballement thermique d'un élément générateur 1, sans que cet excès de chaleur ne soit transféré aux éléments générateurs 1 adjacents dans une proportion pouvant conduire à une contagion du phénomène d'emballement thermique. Ce rôle de confinement thermique permet d'éviter que les risques d'emballement thermique ne se propagent à la totalité de la batterie, ce qui est très critique pour les batteries fortement énergétiques.

Par ailleurs, le système de conditionnement est capable de fonctionner avec de l'eau en ébullition sans risque d'obturation des canaux 14, 15 ou des passages 16; ce qui présente un fort avantage pour la sécurisation de la batterie. En effet, en cas d'incendie ou d'emballement thermique d'un élément générateur 1, le phénomène de vaporisation de l'eau permettra de maintenir la température de la batterie à une valeur fixe, évitant l'apparition de phénomènes d'emballement généralisé. Cette température de vaporisation dépendra de la nature du fluide utilisé, que ce soit de l'eau ou bien un fluide ayant une plus faible température d'ébullition.

## Revendications

1. Batterie électrique comprenant une pluralité d'éléments (1) générateurs d'énergie électrique formés d'au moins une cellule électrochimique (2) qui est conditionnée dans une enveloppe (3) étanche souple, ladite batterie comprenant en outre un système de conditionnement mécanique et thermique desdits éléments, ledit système de conditionnement formant un corps structurel (9) en matériau conducteur thermique, ledit corps présentant deux longerons (10, 11) et une pluralité de traverses (12) reliant lesdits longerons de sorte à former entre lesdites traverses des logements (13) dans lesquels respectivement un élément générateur (1) est disposé, ledit corps intégrant un chemin de circulation d'un fluide de conditionnement thermique, ladite batteriee étant **caractérisée en ce que** le dit chemin comprend deux canaux respectivement amont (14) et aval (15) qui sont formés respectivement dans un longeron (10, 11) et des passages (16) formés dans chacune des traverses (12), lesdits passages étant en communication fluidique de part et d'autre avec respectivement le canal amont (14) et le canal aval (15).

2. Batterie électrique selon la revendication 1, **caractérisée en ce que** les traverses (12) sont adjacentes longitudinalement de sorte à former les logements (13) entre elles, les canaux amont (14) et aval (15) s'étendant longitudinalement dans respectivement un longeron (10, 11).

3. Batterie électrique selon la revendication 1 ou 2, **caractérisée en ce que** les éléments générateurs (1) sont collés sur les traverses (12).

4. Batterie électrique selon l'une quelconque des revendications 1 à 3, **caractérisée en ce que** le corps structurel (9) est formé par l'association étanche de modules (18), lesdits modules comprenant :
- deux portions de longerons (10, 11) dans chacune desquelles une portion de canal (14, 15) est formée ; et
- une traverse (12) sur les bords de laquelle respectivement une portion de longerons (10, 11) est associée, les passages (16) de ladite traverse étant en communication fluidique avec lesdites portions de canal ;
l'association desdits modules étant agencée pour mettre en communication fluidique les portions de canal (14, 15) de sorte à former les canaux amont (14) et aval (15) de part et d'autre des passages (16).

5. Batterie électrique selon la revendication 4, **caractérisée en ce que** la traverse (12) comprend une plaque creuse (21) qui est solidarisée de part et d'autre à un cadre creux (19) formant portion de longerons (10, 11).

6. Batterie électrique selon la revendication 5, **caractérisée en ce que** les modules (18) présentent des cadres creux mâles (19a) et des cadres creux femelles (19b), l'association desdits modules étant réalisée par encastrement desdits cadres creux femelles dans lesdits cadres creux mâles.

7. Batterie électrique selon la revendication 6, **caractérisée en ce qu'**elle comprend un premier type de modules (18a) présentant deux cadres creux mâles (19a) et un deuxième type de modules (18b) présentant deux cadres creux femelles (19b), le corps structurel (9) étant formé par l'encastrement alterné de chacun des types de modules (18a, 18b).

8. Batterie électrique selon la revendication 6, **caractérisée en ce que** chaque module (18) présente un cadre creux mâle (19a) et un cadre creux femelle (19b), le corps structurel (9) étant formé par l'encastrement tête-bêche desdits modules.

9. Batterie électrique selon l'une quelconque des revendications 1 à 8, **caractérisée en ce qu'**au moins une partie du pourtour de l'enveloppe (3) présente une partie affaiblie mécaniquement qui forme zone de rupture (29) en cas de surpression à l'intérieur de ladite enveloppe.

10. Batterie électrique selon la revendication 9, **caractérisée en ce que** la zone de rupture (29) est en communication avec un canal d'échappement.

11. Batterie électrique selon l'une quelconque des revendications 1 à 10, **caractérisée en ce que** le système de conditionnement comprend en outre une matrice structurelle (28) en résine polymère, ladite matrice remplissant au moins partiellement les logements (13) pour venir enrober les éléments générateurs (1).

12. Batterie électrique selon les revendications 3, 4 et 11, **caractérisée en ce que** chaque module (18) intègre une paire d'éléments générateurs (1) qui sont collés respectivement d'un côté de la traverse (12), lesdits éléments étant au moins partiellement enrobés par la matrice structurelle (28).

13. Batterie électrique selon l'une quelconque des revendications 1 à 12, **caractérisée en ce qu'**elle comprend des moyens d'alimentation en fluide du canal amont (14) et des moyens d'évacuation (25) du fluide dans le canal aval (15) après passage dudit fluide au travers des traverses (12).

14. Batterie électrique selon la revendication 13, **caractérisée en ce que** les passages (16) de chacune des traverses (12) sont alimentés en parallèle par le canal amont (14).

15. Batterie électrique selon l'une quelconque des revendications 1 à 14, **caractérisée en ce qu'**elle comprend un bac étanche (17) dans lequel le corps structurel (9) et les éléments générateurs (1) sont disposés, le vide étant réalisé à l'intérieur dudit bac.

## Claims

1. Electric battery comprising a plurality of electrical energy generating elements (1) formed of at least one electrochemical cell (2) which is conditioned in a flexible sealed envelope (3), said battery further comprising a mechanical and thermal conditioning system of said elements, said conditioning system forming a structural body (9) made of thermal material, said body having two spars (10, 11) and a plurality of cross members (12) connecting said spars in such a way as to form between said cross members housings (13) wherein respectively a generating element (1) is arranged, said body incorporating a circulation path for a thermal conditioning fluid, said battery **characterised in that** said path comprises two channels respectively upstream (14) and downstream (15) which are formed respectively in a spar (10, 11) and passages (16) formed in each of the cross members (12), said passages being in fluid communication on either side with respectively the upstream channel (14) and the downstream channel (15).

2. Electric battery according to claim 1, **characterised in that** the cross members (12) are adjacent longitudinally in such a way as to form housings (13) between them, with the upstream channels (14) and downstream channels (15) extending longitudinally in respectively one spar (10, 11).

3. Electric battery according to claim 1 or 2, **characterised in that** the generating elements (1) are glued onto the cross members (12).

4. Electric battery according to any of claims 1 to 3, **characterised in that** the structural body (9) is formed by the sealed association of modules (18), with said modules comprising:
- two portions of spars (10, 11) in which for each of them a channel portion (14, 15) is formed; and
- a cross member (12) on the edges of which respectively a portion of spars (10, 11) is associated, with the passages (16) of said cross member being in fluid communication with said channel portions;
the association of said modules being arranged in order to place into fluid communication the channel portions (14, 15) in such a way as to form the upstream channels (14) and downstream channels (15) on either side of the passages (16).

5. Electric battery according to claim 4, **characterised in that** the cross member (12) comprises a hollow plate (21) which is integral on either side with a hollow frame (19) forming a portion of spars (10, 11).

6. Electric battery according to claim 5, **characterised in that** the modules (18) have hollow male frames (19a) and hollow female frames (19b), with the association of said modules being carried out by embedding of said hollow female frames in said hollow male frames.

7. Electric battery according to claim 6, **characterised in that** it comprises a first type of modules (18a) having two hollow male frames (19a) and a second type of modules (18b) having two hollow female frames (19b), the structural body (9) being formed by the alternating embedding of each one of the types of modules (18a, 18b).

8. Electric battery according to claim 6, **characterised in that** each module (18) has a hollow male frame (19a) and a hollow female frame (19b), the structural body (9) being formed by the head-to-tail embedding of said modules.

9. Electric battery according to any of claims 1 to 8, **characterised in that** at least one portion of the outside edge of the envelope (3) has a mechanically weakened portion which forms a zone of breakage (29) in the event of overpressure inside said envelope.

10. Electric battery according to claim 9, **characterised in that** the zone of breakage (29) is in communication with an exhaust channel.

11. Electric battery according to any of claims 1 to 10, **characterised in that** the conditioning system further comprises a structural matrix (28) made of a polymer resin, said matrix filling at least partially the housings (13) in order to coat the generating elements (1).

12. Electric battery according to claims 3, 4 and 11, **characterised in that** each module (18) incorporates a pair of generating elements (1) which are glued respectively on one side of the cross member (12), said elements being at least partially coated by the structural matrix (28).

13. Electric battery according to any of claims 1 to 12, **characterised in that** it comprises means of supplying with fluid the upstream channel (14) and means for evacuating (25) fluid in the downstream channel (15) after the passing of said fluid through cross members (12).

14. Electric battery according to claim 13, **characterised in that** the passages (16) of each of the cross members (12) are supplied in parallel by the upstream channel (14).

15. Electric battery according to any of claims 1 to 14, **characterised in that** it comprises a sealed box (17) wherein the structural body (9) and the generating elements (1) are arranged, with the vacuum being carried out inside said box.

## Patentansprüche

1. Elektrische Batterie, umfassend eine Vielzahl von elektrische Energie erzeugenden Elementen (1), die aus mindestens einer elektrochemischen Zelle (2) gebildet sind, die in eine elastische, dichte Hülle (3) gepackt ist, wobei die Batterie außerdem ein System zur mechanischen und thermischen Konditionierung der Elemente umfasst, wobei das Konditionierungssystem einen Strukturkörper (9) aus einem wärmeleitenden Werkstoff bildet, wobei der Körper zwei Längsträger (10, 11) aufweist und eine Vielzahl von Querträgern (12), welche die Längsträger so verbinden, dass zwischen den Querträgern Aufnahmen (13) gebildet werden, in denen jeweils ein elektrische Energie erzeugendes Element (1) angeordnet ist, und wobei der Körper einen Zirkulationsweg für ein thermisch konditionierendes Fluid enthält, **dadurch gekennzeichnet, dass** der Zirkulationsweg zwei Kanäle umfasst, einen Zulaufkanal (14) und einen Ablaufkanal (15), die jeweils in einem Längsträger (10, 11) ausgebildet sind, und Durchlässe (16), die in jedem der Querträger (12) ausgebildet sind, wobei die Durchlässe auf der einen Seite mit dem Zulaufkanal (14) und auf der anderen Seite mit dem Ablaufkanal (15) in Fluidverbindung stehen.

2. Elektrische Batterie nach Anspruch 1, **dadurch gekennzeichnet, dass** die Querträger (12) in Längsrichtung so nebeneinanderliegen, dass zwischen ihnen Aufnahmen (13) ausgebildet sind, wobei sich der Zulaufkanal (14) und der Ablaufkanal (15) in Längsrichtung in jeweils einem Längsträger (10, 11) erstrecken.

3. Elektrische Batterie nach Anspruch 1 oder 2, **dadurch gekennzeichnet, dass** die elektrische Energie erzeugenden Elemente (1) an die Querträger (12) geklebt sind.

4. Elektrische Batterie nach einem der Ansprüche 1 bis 3, **dadurch gekennzeichnet, dass** der Strukturkörper (9) aus einer dichten Zusammenlagerung von Modulen (18) gebildet ist, wobei die Module Folgendes umfassen:
- zwei Längsträgerabschnitte (10, 11), in denen jeweils ein Kanalabschnitt (14, 15) ausgebildet ist; und
- einen Querträger (12), an dessen Kanten sich jeweils ein Längsträgerabschnitt (10, 11) anschließt, wobei die Durchlässe (16) des Querträgers in Fluidverbindung mit den Kanalabschnitten sind;
wobei die Zusammenlagerung der Module dergestalt ist, dass die Kanalabschnitte (14, 15) in eine Fluidverbindung gebracht sind, um auf der einen Seite der Durchlässe (16) den Zulaufkanal (14) und auf der anderen Seite den Ablaufkanal (15) zu bilden.

5. Elektrische Batterie nach Anspruch 4, **dadurch gekennzeichnet, dass** der Querträger (12) eine hohle Platte (21) umfasst, die auf beiden Seiten fest mit einem Hohlrahmen (19) verbunden ist, der einen Längsträgerabschnitt (10, 11) bildet.

6. Elektrische Batterie nach Anspruch 5, **dadurch gekennzeichnet, dass** die Module (18) Hohlrahmen mit Steckerelementen (19a) und Hohlrahmen mit Buchsenelementen (19b) aufweisen, wobei die Zusammenlagerung der Module durch Einfügen der Hohlrahmen mit Buchsenelementen in die Hohlrahmen mit Steckerelementen erfolgt.

7. Elektrische Batterie nach Anspruch 6, **dadurch gekennzeichnet, dass** sie einen ersten Modultyp (18a) umfasst, der zwei Hohlrahmen mit Steckerelementen (19a) aufweist, und einen zweiten Modultyp (18b), der zwei Hohlrahmen mit Buchsenelementen (19b) aufweist, wobei der Strukturkörper (9) durch abwechselnden Einbau der beiden Modultypen (18a, 18b) gebildet ist.

8. Elektrische Batterie nach Anspruch 6, **dadurch gekennzeichnet, dass** jedes Modul (18) einen Hohlrahmen mit Steckerelementen (19a) und einen Hohlrahmen mit Buchsenelementen (19b) aufweist, wobei der Strukturkörper (9) durch Einbau der Module in abwechselnd entgegengesetzten Orientierungen, Kopf-an-Fuß, gebildet ist.

9. Elektrische Batterie nach einem der Ansprüche 1 bis 8, **dadurch gekennzeichnet, dass** mindestens ein Teil des Umfangs der Hülle (3) einen mechanisch geschwächten Teil darstellt, der bei einem Überdruck im Innern der Hülle eine Bruchzone (29) bildet.

10. Elektrische Batterie nach Anspruch 9, **dadurch gekennzeichnet, dass** die Bruchzone (29) mit einem Auslasskanal in Verbindung steht.

11. Elektrische Batterie nach einem der Ansprüche 1 bis 10, **dadurch gekennzeichnet, dass** das Konditionierungssystem außerdem eine Strukturmatrix (28) aus Polymerharz umfasst, wobei die Matrix die Aufnahmen (13) zumindest teilweise ausfüllt, um die elektrische Energie erzeugenden Elemente (1) einzubetten.

12. Elektrische Batterie nach den Ansprüchen 3, 4 und 11, **dadurch gekennzeichnet, dass** jedes Modul (18) ein Paar elektrische Energie erzeugende Elemente (1) enthält, die jeweils an eine Seite des Querträgers (12) geklebt sind, wobei die Elemente zumindest teilweise von der Strukturmatrix (28) umhüllt sind.

13. Elektrische Batterie nach einem der Ansprüche 1 bis 12, **dadurch gekennzeichnet, dass** sie Mittel zum Speisen des Zulaufkanals (14) mit Fluid und Mittel zum Ableiten (25) des Fluids aus dem Ablaufkanal (15), nachdem es die Querträger (12) durchströmt hat, umfasst.

14. Elektrische Batterie nach Anspruch 13, **dadurch gekennzeichnet, dass** die Durchlässe (16) aller Querträger (12) durch den Zulaufkanal (14) parallel gespeist werden.

15. Elektrische Batterie nach einem der Ansprüche 1 bis 14, **dadurch gekennzeichnet, dass** sie ein dichtes Aufnahmegefäß (17) umfasst, in dem der Strukturkörper (9) und die elektrische Energie erzeugenden Elemente (1) angeordnet sind, und im Innern des Aufnahmegefäßes Vakuum herrscht.
